**Europäisches Patentamt**

**European Patent Office**

**Office européen des brevets**

(11) Veröffentlichungsnummer: **0 279 944**
**B1**

(12) **EUROPÄISCHE PATENTSCHRIFT**

(45) Veröffentlichungstag der Patentschrift: **30.01.91**

(21) Anmeldenummer: **87118905.6**

(22) Anmeldetag: **19.12.87**

(51) Int. Cl.⁵: **G 05 D 5/04,** G 05 D 25/02, G 01 B 11/02

(54) **Lichtelektrische Positionsmesseinrichtung.**

(30) Priorität: **21.02.87 DE 3705653**

(43) Veröffentlichungstag der Anmeldung:
**31.08.88 Patentblatt 88/35**

(45) Bekanntmachung des Hinweises auf die Patenterteilung:
**30.01.91 Patentblatt 91/05**

(84) Benannte Vertragsstaaten:
**AT CH DE ES FR GB IT LI NL SE**

(56) Entgegenhaltungen:
**DE-A-3 417 176**
**DE-C-3 625 327**

(73) Patentinhaber: **DR. JOHANNES HEIDENHAIN GMBH**
**Dr.-Johannes-Heidenhain-Strasse 5 Postfach 1260**
**D-8225 Traunreut (DE)**

(72) Erfinder: **Michel, Dieter, Dipl.-Ing. (FH)**
**Langauenstrasse 12**
**D-8220 Traunstein (DE)**
Erfinder: **Parriaux, Olivier, Dr.**
**Place de la Palud 1**
**CH-1003 Lausanne (CH)**
Erfinder: **Voirin, Guy, Dr.**
**Rue des Brévards 6**
**CH-2000 Neuchâtel (CH)**

Courier Press, Leamington Spa, England.

**Beschreibung**

Die Erfindung bezieht sich auf eine lichtelektrische Positionsmeßeinrichtung gemäß dem Oberbegriff des Anspruchs 1.

In der DE—A—33 16 144 und der JP—A—59-164 914 werden derartige Geräte beschrieben. Bei derartigen Geräten stellt ein Beugungsgitter das Bezugsmaß dar. Ein Beugungsgitter besteht aus sehr dünnen Gitterlinien, die dicht nebeneinander liegend zum Beispiel auf einer Glas- oder Metallplatte durch mechanische Bearbeitung, durch ein optisches Lithographieverfahren oder durch Elektronenstrahllithographie ausgebildet sind. Ferner sind bei derartigen Geräten vorgesehen: eine Lichtquelle, die monochromatisches Licht aussendet, beispielsweise Laserlicht, zwei Reflektorspiegel und ein auf der der Lichtquelle gegenüberliegenden Seite des Beugungsgitters befindlicher Detektor, der Interferenzlicht empfängt. Der von der Lichtquelle ausgesendete Lichtstrahl wird von dem Beugungsgitter gebeugt und hindurchgelassen. Wenn man annimmt, daß das Beugungsgitter bezüglich einem anderen Teil des optischen Systems, beispielsweise bezüglich der Lichtquelle und den Reflektorspiegeln relativ bewegt wird, so ändert sich das Interferenzlicht über zwei Perioden, wenn sich das Beugungsgitter über eine Periode bewegt.

Bei einer weiteren Anordnung wird der von der Lichtquelle ausgesendete Lichtstrahl von dem Beugungsgitter gebeugt, und Lichtbündel derselben Ordnung mit unterschiedlichen Vorzeichen überlappen sich und interferieren miteinander, indem z.B. ein halbdurchlässiger Spiegel vorgesehen wird, bevor das Licht in den Detektor eintritt. Nimmt man also wieder an, daß das Beugungsgitter und ein anderer Teil des optischen Systems relativ zueinander bewegt werden, wie es bereits oben erläutert wurde, so ändert sich das Interferenzlicht über zwei Perioden, während sich das Beugungsgitter über eine Periode bewegt.

Es ist problematisch, die beschriebenen optischen Anordnungen auf kleinem Raum unterzubringen. Das optische System wird leicht sehr umfangreich, so daß relativ viel Platz zur Verfügung stehen muß.

Aus der nachveröffentlichten EP—A—254823, die aber einen Prioritätstag von 26.07.1986 hat und deshalb unter Artikel 54(3) EPÜ fällt, ist eine Positionsmeßeinrichtung bekannt, die einfach im Aufbau ist und bei der Störungen durch Umgebungseinflüsse weitgehend ausgeschaltet sind, so daß sich eine zuverlässige Arbeitsweise ergibt.

Die Vorteile des Gegenstandes des Hauptpatentes sind die kompakte Bauweise, die Integrationsfähigkeit und die Störsicherheit gegenüber Umgebungseinflüssen.

Der Erfindung liegt die Aufgabe zugrunde, bei einer Positionsmeßeinrichtung der genannten Gattung die Bauelemente so auszugestalten, daß sich quer zur Meßrichtung eine geringe Baugröße ergibt.

Diese Aufgabe wird durch eine Positionsmeßeinrichtung mit den Merkmalen des Anspruchs 1 gelöst. Die in den abhängigen Ansprüchen angegebenen Merkmale gestalten in ganz besonders vorteilhafter Weise die Positionsmeßeinrichtung gemäß Anspruch 1 aus.

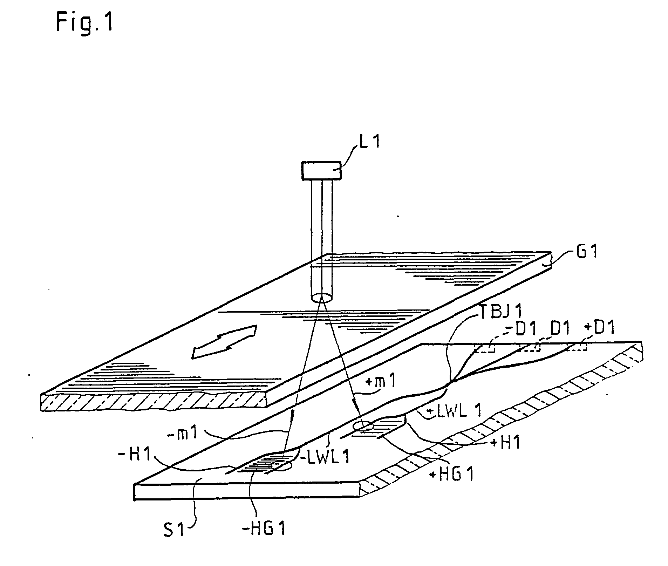

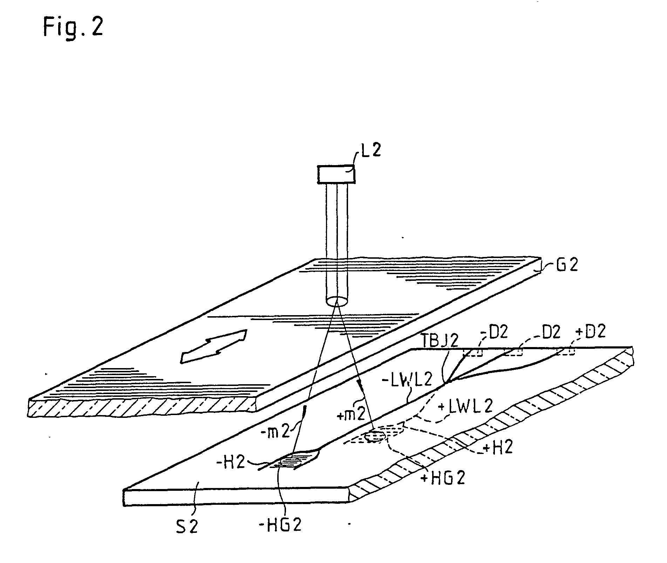

Die Erfindung soll nachstehend mit Hilfe von Ausführungsbeispielen anhand der Zeichnungen noch näher erläutert werden. An dieser Stelle muß ausdrücklich darauf hingewiesen werden, daß sowohl bei der Darstellung in Figur 1 als auch in den Figuren 2 bis 4 die geometrischen Zuordnungen nicht maßstäblich, sondern übertrieben verzerrt abgebildet sind, damit die Unterschiede mit bloßem Auge wahrnehmbar sind. Der Fachmann auf dem Gebiet der integrierten Optik wird in Kenntnis der Erfindung die Dimensionierungen und Lagezuordnungen ohne weiteres in die Praxis umsetzen können. Aus den vorstehenden Gründen können auch die Strahlenverläufe und die Beugungsbilder nicht optisch korrekt, sondern nur symbolisch dargestellt werden.

Es zeigt

Figur 1 eine Positionsmeßeinrichtung mit parallel und in Meßrichtung zueinander versetzten Einkoppelelementen;

Figur 2 eine Positionsmeßeinrichtung mit Einkoppelelementen in verschiedenen Ebenen;

Figur 3 eine Positionsmeßeinrichtung mit fluchtenden Einkoppelelementen und ungeradlinig verlaufenden Lichtwellenleitern und

Figur 4 eine Positionsmeßeinrichtung mit parallel zueinander versetzten Einkoppelelementen.

Bei einer in Figur 1 dargestellten Positionsmeßeinrichtung ist ein Beugungsgitter G1 vorgesehen, dessen Position relativ zum Substrat S1 gemessen werden soll.

Die Strahlung eines Halbleiterlasers L1 wird am Beugungsgitter G1 gebeugt und es entstehen Teilstrahlenbündel +m1 und −m1 von gleicher Ordnung, aber entgegengesetztem Vorzeichen.

Die Teilstrahlenbündel +m1 und −m1 fallen auf ein Substrat S1. Auf dem Substrat S1 befinden sich zwei Einkoppelemente +H1 und −H1, zwei Lichtwellenleiter +LWL1 und −LWL1, ein Koppler TBJ1 sowie drei Detektoren +D1, D1, −D1. Im vorliegenden Ausführungsbeispiel sind diese Elemente in Form einer integrierten optischen Schaltung auf dem Substrat S1 zusammengefaßt.

Die Einkoppelelemente +H1 und −H1 sind als sogenannte adiabatische Hörner aufgebaut, auf die bereits in der Hauptanmeldung Bezug genommen worden ist. Die Einkoppelelemente +H1 und −H1 sind in Längsrichtung des Beugungsgitters G1 orientiert und quer zur in Meßrichtung verlaufenden Symmetrielinie und in Meßrichtung auf dem Substrat S1 zueinander versetzt angeordnet. Die Einkoppelelemente +H1 und −H1 weisen Einkoppelgitter +HG1 und −HG1 auf, deren Gitterstriche die gleiche Orientierung haben, wie die Gitterstriche des Beugungsgitters G1. Das Entscheidende sind jedoch die unterschiedlichen Gitterkonstanten der Einkoppelgitter +HG1 und −HG1. Die Unterschiedlichkeit der Gitterkonstanten der Einkoppelgitter +HG1 und −HG1 ist erforderlich, weil die Einkoppelbedingungen der gebeugten Teilstrahlenbündel +m1 und −m1 unterschiedlich sind.

Durch diese Maßnahme wird erreicht, daß die erfindungsgemäße Positionsmeßeinrichtung quer zur Meßrichtung eine wesentlich geringere Baugröße aufweist, als die Ausführungsbeispiele im Hauptpatent.

Die gleichen Vorteil ergeben sich bei einer Anordnung nach Figur 2. Da die Bauelemente die gleichen sind wie in der Figur 1, werden sie nur durch die der Figurenbezifferung entsprechende Indexziffer ergänzt. Ein Halbleiterlaser L2 beleuchtet ein Beugungsgitter G2, welches gebeugte Teilstrahlenbündel $+m2$ und $-m2$ erzeugt, die auf einem Substrat S2 auf Einkoppelelemente $+H2$ und $-H2$ treffen. Das Einkoppelelement $+H2$ weist ein Einkoppelgitter $+HG2$ auf, dessen Gitterkonstante von der des Einkoppelgitters $-HG2$ abweicht, das Bestandteil des zweiten Einkoppelelementes $-H2$ ist. Die Besonderheit dieses Ausführungsbeispieles liegt darin, daß das Einkoppelelement $+H2$ mit seinem Einkoppelgitter $+HG2$ in einer anderen Ebene—hier in einer tieferen Ebene—liegt, als das Einkoppelelement $-H2$ mit seinem Einkoppelgitter $-HG2$. Die Einkoppelgitter $+HG2$ und $-HG2$ sowie die ihnen zugeordneten Lichtwellenleiter $+LWL2$ und $-LWL 2$ sind so ausgestaltet, daß sie sich gegenseitig nicht beeinflussen. In einem Koppler TBJ2 werden die Teilstrahlenbündel $+m2$ und $-m2$ in bekannter Weise zur Interferenz gebracht und über die Ausgänge des Kopplers TBJ2 Detektoren $+D2$, D2 und $-D2$ zugeführt.

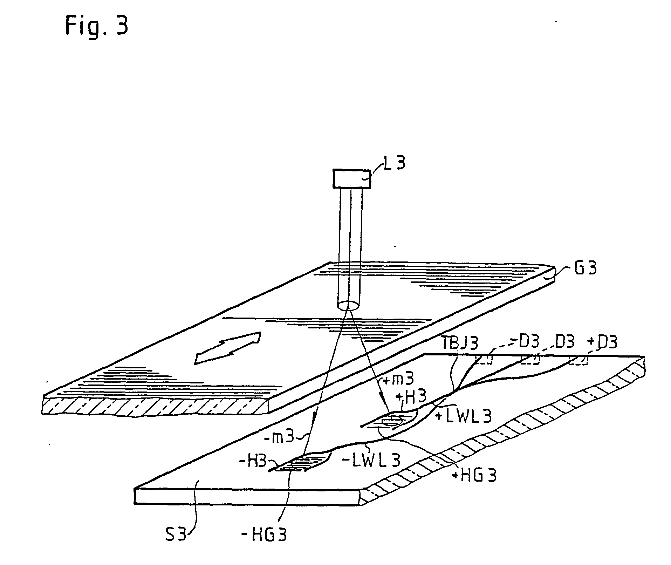

Das in Figur 3 gezeigte Ausführungsbeispiel weist zwei Einkoppelelemente $+H3$ und $-H3$ mit ihren jeweiligen Einkoppelgittern $+HG3$ und $-HG3$ auf, die wiederum unterschiedliche Gitterkonstanten haben. Die Einkoppelelemente $+H3$ und $-H3$ liegen in einer Ebene parallel zum Beugungsgitter G3 und fluchtend hintereinander. Ein Lichtwellenleiter $-LWL3$, der vom Einkoppelelement $-H3$ zum Koppler TBJ3 führt, wird an dem anderen Einkoppelelement $+H3$ vorbeigeleitet und im Koppler TBJ3 mit einem vom Einkoppelelement $+H3$ zum Koppler TBJ3 führenden Lichtwellenleiter $+LWL3$ vereinigt. Ausgänge des Kopplers TBJ3 führen zu Detektoren $+D3$, D3 und $-D3$, Die Koppler TBJ können so ausgelegt werden, daß an ihren drei Ausgängen zueinander phasenverschobene Signale anstehen. Die Signale können zueinander jeweils um 120° phasenverschoben sein, es können aber auch an zwei Ausgängen Signale anstehen, die eine Sinus- bzw. Cosinus-Funktion repräsentieren, wobei am dritten Ausgang ein Referenzsignal ansteht. Die Signale an den Ausgängen werden ebenfalls mittels Lichtwellenleitern zu Detektoren geleitet, von denen sie in elektrische Signale umgewandelt und einer elektronischen Auswerteschaltung zugeführt werden.

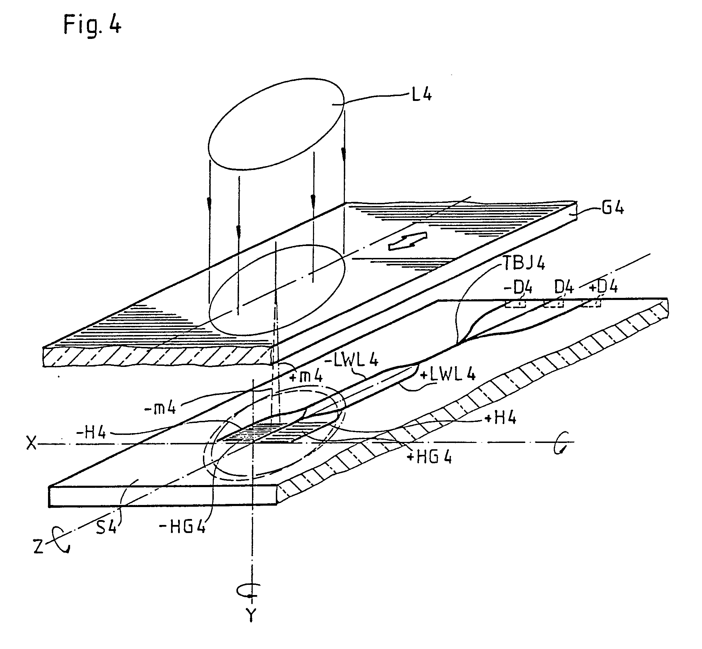

Die in Figur 4 dargestellte Anordnung zeigt auf einem Substrat S4 zwei Einkoppelelemente $+H4$ und $-H4$, die in gleicher Richtung verlaufen wie das Beugungsgitter G4, jedoch quer zu der in Meßrichtung verlaufenden Symmetrielinie des Beugungsgitters G4 versetzt sind.

Im Gegensatz zu dem Ausführungsbeispiel gemäß Figur 1 sind die Einkoppelelemente $+H4$, $-H4$ jedoch in Meßrichtung nicht zueinander versetzt.

Mit L4 wird hier ein von einem nicht dargestellten Laser ausgehendes Strahlenbündel bezeichnet. Das Strahlenbündel L4 mußte mit übertrieben großer Ausdehnung gezeigt werden, um darstellen zu können, daß die beiden Teilstrahlenbündel $+m4$ und $-m4$ die gleiche optische Weglänge von einem durch das Strahlenbündel 4 beleuchteten Abtastfeld am Beugungsgitter G4 zurücklegen müssen.

Wie der strich-punktiert dargestellte Strahlenverlauf des gebeugten Teilstrahlenbündels $+m4$ symbolisiert, wird es entgegengesetzt gebeugt, wie der gestrichelt dargestellte Strahlenverlauf des Teilstrahlenbündels $-m4$.

Es ist aus der Darstellung erkennbar, daß zwar die Einkoppelelemente $+H4$ und $-H4$ mit ihren Einkoppelgittern $+HG4$ und $-HG4$ in Meßrichtung nicht zueinander der versetzt sind, aber es wird deutlich, daß die beiden vom Strahlenbündel L4 ausgehenden gebeugten Teilstrahlenbündel $+m4$ und $-m4$ in Meßrichtung zueinander versetzt sind, wie aus der Darstellung mit strichpunktierten bzw. gestrichelten Linien ersichtlich ist.

Die Einkoppelelemente $+H4$ und $-H4$ sind sozusagen an der Symmetrielinie, die durch die Z-Achse symbolisiert ist, gespiegelt, was sich jedoch nicht auf die Gitterkonstanten ihrer Einkoppelgitter $+HG4$ und $-HG4$ bezieht (diese sind unterschiedlich, wie bei den anderen Ausführungsbeispielen).

In Figur 4 ist ein Koordinatensystem X, Y, Z eingetragen worden, um die geometrischen Beziehungen besser festlegen zu können. Diese Koordinaten-Festlegung gilt auch für die Figuren 1 bis 3, ohne daß die Achsen dort gesondert eingezeichnet sind. Am vorliegenden Ausführunsbeispiel wird deutlich, daß Verdrehungen des Substrates S4 um die X-Achse keinen Einfluß und Verdrehungen um die Z-Achse nur ganz minimalen Einfluß auf das Meßergebnis haben, da der Versatz der beiden Einkoppelelemente $+H4$ und $-H4$ quer zur Z-Achse sehr klein—etwa 100 μm—gehalten werden kann und in Richtung der Z-Achse kein Versatz vorhanden ist.

Ferner ist der Einfluß von Temperaturschwankungen und Vibrationen des Substrates äußerst gering. Die Ausführungsform gemäß Figur 4 hat ferner den Vorteil, daß bei paralleler Ausrichtung des Beugungsgitters G4 zum Substrat S4 die gebeugten Teilstrahlenbündel $+m4$ und $-m4$ praktisch die gleiche optische Weglänge zum Koppler TBJ4 aufweisen, so daß Lichtquellen mit geringer Kohärenzlänge verwendet werden können.

Bei Positionsmeßeinrichtungen der beschriebenen Gattung werden die Verschiebebewegungen des Beugungsgitters auf diese Weise zu im allgemeinen digital angezeigten Positionsmeßwerten für die zu messende Maschinenbewegungen umgeformt.

## Patentansprüche

1. Lichtelektrische Positionsmeßeinrichtung zur Messung der Relativlage zweier Objekte mit einer Licht aussendenden Strahlungsquelle (L1) und wenigstens einem quer zur Strahlungsrichtung der vorgenannten Strahlungsquelle (L1) verschiebbaren Beugungsgitter (G1) zum Erzeugen von mindestens zwei gebeugten Teilstrahlenbündeln (−m1, +m1) dadurch gekennzeichnet, daß die mittels zwei Einkoppelelementen (−H1, +H1) in zwei Lichtwellenleiter (−LWL1, +LWL1) eingekoppelten Teilstrahlenbündel (−m1, +m1) zwei Ejb cingängen eines Kopplers (TBJ1) zugeführt, im Koppler zur Interferenz gebracht und von Detektoren (−D1, D1, +D1) in zueinander phasenverschobene elektrische Signale umgewandelt werden, wobei die Einkoppelelemente (−H1, +H1) Einkoppelgitter (−HG1, +HG1) mit unterschiedlichen Gitterkonstanten aufweisen.

2. Lichtelektrische Positionsmeßeinrichtung nach Anspruch 1, dadurch gekennzeichnet, daß die Einkoppelgitter (+HG1, −HG1; +HG4, −HG4) in gleicher Richtung verlaufen wie das Beugungsgitter (G1; G4) jedoch quer zur in Meßrichtung verlaufenden Symmetrielinie des Beugungsgitters (G1; G4) versetzt sind.

3. Lichtelektrische Positionsmeßeinrichtung nach den Ansprüchen 1 und 2, dadurch gekennzeichnet, daß die Einkoppelelemente (+H1, −H1) mit den Einkoppelgittern (+HG1, −HG1) zusätzlich in Meßrichtung zueinander versetzt sind.

4. Lichtelektrische Positionsmeßeinrichtung nach den Ansprüchen 1 bis 3, dadurch gekennzeichnet, daß die Einkoppelgitter (+HG1, −HG1; +HG4, −HG4) in einer Ebene parallel zum Beugungsgitter (G1; G4) angeordnet sind.

5. Lichtelektrische Positionsmeßeinrichtung nach Anspruch 1, dadurch gekennzeichnet, daß die Einkoppelgitter (+HG2 ... −HG3) in Meßrichtung fluchtend verlaufen.

6. Lichtelektrische Positionsmeßeinrichtung nach Anspruch 1 und 5, dadurch gekennzeichnet, daß die Einkoppelgitter (+HG2, −HG2) in unterschiedlichen Ebene parallel zum Beugungsgitter (G2) verlaufen.

7. Lichtelektrische Positionsmeßeinrichtung nach Anspruch 1 und 5, dadurch gekennzeichnet, daß die Einkoppelgitter (+HG3, −HG3) in einer Ebene parallel zum Beugungsgitter (G3) liegen, und daß der Lichtwellenleiter (−LWL3) des einen Einkoppelgitters (−HG3) seitlich am anderen Einkoppelgitter (+HG3) vorbeigeführt wird.

## Revendications

1. Dispositif pour mesurer photo-électriquement une position, destiné à mesurer la position relative de deux objets avec une source de rayonnement (L1) émettant de la lumière et avec au moins un réseau de diffraction (G1) qui peut être déplacé perpendiculairement à la direction de rayonnement de la source précitée (L1) afin de produire au moins deux faisceaux lumineux partiels diffractés (−m1, +m1), caractérisé en ce que les faisceaux lumineux partiels (−m1, +m1), qui sont couplés dans deux guides d'ondes lumineuses (−LWL1, +LWL1) à l'aide de deux éléments de couplage (−H1, +H1), sont fournis à deux entrées d'un coupleur (TBJ1), amenés en interférence dans le coupleur et transformés par des détecteurs (−D1, D1, +D1) en des signaux électriques en décalage de phase l'un par rapport à l'autre, les éléments de couplage (−H1, +H1) présentant des réseaux de couplage (−−HG1, +HG1) avec des constantes de réseau différentes.

2. Dispositif pour mesurer photo-électriquement une position selon la revendication 1, caractérisé en ce que les réseaux de couplage (+HG1, −HG1; +HG4, −HG4) s'étendent dans la même direction que le réseau de diffraction (G1; G4), en étant toutefois décalés transversalement par rapport à l'axe de symétrie, qui s'étend dans la direction de mesure, du réseau de diffraction (G1; G4).

3. Dispositif pour mesurer photo-électriquement une position selon les revendications 1 et 2, caractérisé en ce que les éléments de couplage (+H1, −H1) munis des réseaux de couplage (+HG1, −HG1) sont en outre mutuellement décalés dans la direction de mesure.

4. Dispositif pour mesurer photo-électriquement une position selon les revendications 1 à 3, caractérisé en ce que les réseaux de couplage (+HG1, −HG1; +HG4, −HG4) sont disposés dans un plan parallèlement au réseau de diffraction (G1; G4).

5. Dispositif pour mesurer photo-électriquement une position selon la revendication 1, caractérisé en ce que les réseaux de couplage (+HG2 ... −HG3) s'étendent en alignement dans la direction de mesure.

6. Dispositif pour mesurer photo-électriquement une position selon les revendications 1 et 5, caractérisé en ce que les réseaux de couplage (+HG2, −HG2) s'étendent dans des plans différents parallèlement au réseau de diffraction (G2).

7. Dispositif pour mesurer photo-électriquement une position selon les revendications 1 et 5, caractérisé en ce que les réseaux de couplage (+HG3, −HG3) s'étendent dans un plan parallèle au réseau de diffraction (G3), et en ce que le guide d'ondes lumineuses (−LWL3) d'un des réseaux de couplage (−HG3) est amené latéralement devant l'autre réseau de couplage (+HG3).

## Claims

1. A photoelectrical position measurement device for measuring the relative positions of two objects with a light-emitting radiation source (L1), and at least one diffraction grid (G1) movable transversely to the direction of radiation of the abovementioned radiation source (L1), in order to generate at least two diffracted partial light beams (−m1, +m1), characterised in that the partial light beams (−m1, +m1) input by means of two input elements (−H1, +H1) into two waveguides (−LWL1, +LWL1), are passed to two inputs of a coupler (TBJ1), are brought to interference in the coupler, and are converted by detectors (−D1, D1, +D1) into electrical signals phase-offset to one another, the input elements (−H1, +H1) having input grids (−HG1, +HG1) with differing grid constants.

2. A photoelectrical position measurement device according to Claim 1, characterised in that the input grids (+HG1, −HG1; +HG4, −HG4) extend in the same direction as the diffraction grid (G1; G4), yet are offset transversely to the line of symmetry of the diffraction grid (G1; G4) extending in the direction of measurement.

3. A photoelectrical position measurement device according to Claims 1 and 2, characterised in that the input elements (+H1, −H1), with the input grids (+HG1, −HG1) are additionally offset to one another in the direction of measurement.

4. A photoelectrical position measurement device according to Claims 1 to 3, characterised in that the input grids (+HG1, −HG1; +HG4, −HG4) are located on one plane parallel to the diffraction grid (G1; G4).

5. A photoelectrical position measurement device according to Claim 1, characterised in that the input grids (+HG2 ... −HG3) extend in alignment in the direction of measurement.

6. A photoelectrical position measurement device according to Claims 1 and 5, characterised in that the input grids (+HG2, −HG2) extend on different planes parallel to the diffraction grid (G2).

7. A photoelectrical position measurement device according to Claims 1 and 5, characterised in that the input grids (+HG3, −HG3) lie on one plane parallel to the diffraction grid (G3), and that the optical waveguide (−LWL3) of one input grid (−HG3), is led laterally past the other input grid (+HG3).

## Fig.1

Fig. 2

Fig. 3

Fig. 4